# EUROPÄISCHE PATENTANMELDUNG

(11) **EP 3 988 374 A1**
(43) Veröffentlichungstag der Anmeldung: **27.04.2022**
(21) Anmeldenummer: 21204130.5
(22) Anmeldetag: 22.10.2021
(51) Int. Cl.: B60L 5/04, B60L 5/16, B60L 5/30, B60L 5/42

(54) **STROMABNEHMER**

(30) Priorität: 23.10.2020 DE 102020127969
(71) Anmelder: Conductix-Wampfler GmbH, 79576 Weil am Rhein (DE)
(72) Erfinder: Seidel, Dieter, 79585 Steinen (DE)
(74) Vertreter: Charrier Rapp & Liebau

(57) **Zusammenfassung**

Bei einem Stromabnehmer (1) zur elektrischen Versorgung eines längs einer Schleifleitung bewegbaren elektrischen Verbrauchers, mit einem beweglich gelagerten Halter (6) für einen Schleifkörper (7), dessen Bewegungsbereich durch zwei mechanische Anschläge (17, 18; 21, 22) begrenzt wird, und der zum Anpressen des Schleifkörpers (7) gegen eine Stromschiene der Schleifleitung durch eine Federanordnung mit einer Kraft in Richtung eines ersten Endes seines Bewegungsbereiches beaufschlagt wird, ist eine Dämpfungseinrichtung (25, 26) vorgesehen, welche eine durch die Federanordnung bewirkte Bewegung des Halters (6) in Richtung des ersten Endes seines Bewegungsbereiches dämpft, wenn sich der Halter (6) innerhalb eines vorbestimmten ersten Abschnitts (C) seines Bewegungsbereiches, der auf einer Seite durch das erste Ende begrenzt wird und nicht den gesamten Bewegungsbereich umfasst, befindet. Die Dämpfungseinrichtung kann (25, 26) in Form eines Strömungsdämpfers oder eines Reibungsdämpfers oder in Form mindestens eines Federelements realisiert sein.

## Beschreibung

Die Erfindung betrifft einen Stromabnehmer nach dem Oberbegriff des Anspruchs 1.

Stromabnehmer von Schleifleitungssystemen zur elektrischen Versorgung längs einer Schleifleitung bewegbarer elektrischer Verbraucher sind im Betrieb häufig dynamischen Belastungen ausgesetzt. So existieren Anwendungen, bei denen die Stromabnehmer der beweglichen Verbraucher nur temporär, d. h. nur entlang eines Teils des gesamten Bewegungsbereiches eines Verbrauchers im Einsatz sind, wie es beispielsweise bei Sortieranlagen üblich ist. Hieraus ergibt sich das Problem besonderer Belastungen des Stromabnehmers beim Einfahren in einen Streckenabschnitt, in dem er im Einsatz ist, beim Ausfahren aus einem solchen Streckenabschnitt und in einem Streckenabschnitt, in dem er nicht im Einsatz ist.

Die Belastung beim Einfahren wird heute durch lange Trichter reduziert, durch welche der Stromabnehmer eingefangen und über eine flache Rampe kontinuierlich in seine Betriebsposition im Eingriff mit der Schleifleitung geführt wird. Zum Ausfahren werden üblicherweise keine solchen Trichter eingesetzt, so dass der Stromabnehmer beim Ausfahren aus dem Ende einer Schleifleitung herausgeschleudert wird und an einem mechanischen Anschlag, welcher seinen Bewegungsbereich begrenzt, anschlägt. Bei der anschließenden Bewegung des Verbrauchers ohne Kontakt des Stromabnehmers mit der Schleifleitung ist der Stromabnehmer einer erhöhten Vibrationsbelastung ausgesetzt.

Eine weitere Art der dynamischen Belastung eines Stromabnehmers besteht in einer Änderung des Abstandes zwischen einem beweglichen Verbraucher und der entlang seiner Bewegungsbahn verlegten Schleifleitung. Insbesondere kommt es in Kurven regelmäßig zu einer Verringerung besagten Abstandes, durch die sich bei der üblichen Erzeugung der Anpresskraft des Stromabnehmers gegen die Stromschiene der Schleifleitung durch eine normale Feder die Anpresskraft unnötigerweise erhöht.

Solche dynamischen Belastungen bei Änderungen des Betriebszustandes tragen signifikant zum Verschleiß der Mechanik eines Stromabnehmers bei.

Aufgabe der Erfindung ist es deshalb, die dynamische Belastung der Mechanik eines Stromabnehmers bei Änderungen seines Betriebszustandes zu reduzieren.

Die Erfindung löst diese Aufgabe durch einen Stromabnehmer mit den Merkmalen des Anspruchs 1. Vorteilhafte Weiterbildungen und Ausgestaltungen der Erfindung sind in den Unteransprüchen angegeben.

Erfindungsgemäß ist ein Stromabnehmer zur elektrischen Versorgung eines längs einer Schleifleitung bewegbaren elektrischen Verbrauchers mit einem beweglich gelagerten Halter für einen Schleifkörper, dessen Bewegungsbereich durch zwei mechanische Anschläge begrenzt wird, und der zum Anpressen des Schleifkörpers gegen eine Stromschiene der Schleifleitung durch eine Federanordnung mit einer Kraft in Richtung eines ersten Endes seines Bewegungsbereiches beaufschlagt wird, dadurch gekennzeichnet, dass der Bewegungsbereich des Halters drei Abschnitte umfasst, wobei ein vorbestimmter erster Abschnitt auf einer Seite durch das erste Ende des Bewegungsbereiches begrenzt wird und nicht den gesamten Bewegungsbereich umfasst, sich an den vorbestimmten ersten Abschnitt ein zweiter Abschnitt und an diesen ein dritter Abschnitt anschließt, welcher sich bis zu einem zweiten, dem ersten entgegengesetzten Ende des Bewegungsbereiches erstreckt, und dass die Steifigkeit der Federanordnung im dritten Abschnitt geringer ist als im zweiten Abschnitt. Hierdurch wird im dritten Abschnitt des Bewegungsbereiches des Halters des Schleifkörpers eine unnötig hohe Anpresskraft des Schleifkörpers gegen die Stromschiene der Schleifleitung bei einer deutlichen Verringerung des Abstandes zwischen dem beweglichen Verbraucher und der Stromschiene, wie sie insbesondere bei einer Kurvenfahrt vorkommt, vermieden.

Alternativ oder zusätzlich kann ein erfindungsgemäßer Stromabnehmer zur elektrischen Versorgung eines längs einer Schleifleitung bewegbaren elektrischen Verbrauchers mit einem beweglich gelagerten Halter für einen Schleifkörper, dessen Bewegungsbereich durch zwei mechanische Anschläge begrenzt wird, und der zum Anpressen des Schleifkörpers gegen eine Stromschiene der Schleifleitung durch eine Federanordnung mit einer Kraft in Richtung eines ersten Endes seines Bewegungsbereiches beaufschlagt wird, dadurch gekennzeichnet sein, dass eine Dämpfungseinrichtung vorgesehen ist, welche eine durch die Federanordnung bewirkte Bewegung des Halters in Richtung des ersten Endes seines Bewegungsbereiches dämpft, wenn sich der Halter innerhalb eines vorbestimmten ersten Abschnitts seines Bewegungsbereiches, der auf einer Seite durch das erste Ende begrenzt wird und nicht den gesamten Bewegungsbereich umfasst, befindet.

Hierdurch wird vermieden, dass in Anlagen, in denen entlang der Bewegungsbahn eines beweglichen Verbrauchers nur abschnittsweise eine Schleifleitung verlegt ist, der bewegliche Teil des Stromabnehmers beim Ausfahren aus der Schleifleitung durch die Federanordnung, welche die Kraft zum Anpressen des Schleifkörpers des Stromabnehmers an die Stromschiene der Schleifleitung bereitstellt, hart gegen den mechanischen Anschlag, welcher den Bewegungsbereich des Halters des Schleifkörpers begrenzt, geschleudert wird. Bei der weiteren Bewegung in einem Bahnabschnitt ohne Kontakt des Stromabnehmers mit einer Schleifleitung wird dann die Vibration des Stromabnehmers an seinem mechanischen Anschlag durch das Dämpfungselement gedämpft. Die mechanische Belastung des Stromabnehmers und der durch sie verursachte Verschleiß der Mechanik des Stromabnehmers werden durch die Dämpfung signifikant verringert.

Die Dämpfungseinrichtung kann vorteilhaft in Form eines Strömungsdämpfers oder eines Reibungsdämpfers an sich bekannter Art oder auch in Form mindestens eines Federelements realisiert sein, wobei als Federelement auch ein Pufferelement aus einem Elastomer verwendet werden kann.

Die Federanordnung kann mindestens zwei mechanisch parallel zueinander geschaltete Federn aufweisen, von denen mindestens eine im gesamten Bewegungsbereich des Halters wirksam ist und mindestens eine im zweiten Abschnitt des Bewegungsbereiches wirksam ist und im dritten Abschnitt unwirksam ist. Dies ist eine besonders einfache und daher zweckmäßige Art der Realisierung einer Federanordnung mit zwei Auslenkungsbereichen unterschiedlicher Steifigkeit, wie sie in der vorliegenden Anwendung erwünscht sind. Hierbei können die im zweiten Abschnitt wirksame und im dritten Abschnitt unwirksame Feder und die im gesamten Bewegungsbereich des Halters wirksame Feder unterschiedliche Steifigkeiten aufweisen, um einen zusätzlichen Freiheitsgrad für die optimale Einstellung der resultierenden Federkennlinie der Federanordnung zu schaffen.

Eine einfache und besonders vorteilhafte Form der Realisierung der im zweiten Abschnitt wirksamen und im dritten Abschnitt unwirksamen Feder kann eine pneumatische Feder sein. Eine solche pneumatische Feder weist vorzugsweise eine Kammer mit variablem, von der Auslenkung der Feder abhängigem Volumen auf, in der bei einer Auslenkung, durch welche sich die Federkraft erhöht, ein Gas komprimiert wird, und dass die Kammer weist eine Auslassöffnung auf, die bei einem vorbestimmten Ausmaß der Auslenkung geöffnet wird, wodurch die pneumatische Feder bei Überschreitung dieses Ausmaßes der Auslenkung unwirksam wird. Die schlagartige Unwirksamkeit einer Feder kann auf diese Weise mit einfachen Mitteln ohne Einsatz aufwendiger elektronischer und elektromechanischer Komponenten realisiert werden.

Alternativ zur Parallelschaltung mindestens zweier Federn, von denen mindestens eine bei einer bestimmten Auslenkung unwirksam wird, kann die Federanordnung auch mindestens eine Säule aus Tellerfedern aufweisen. Auch hiermit kann eine degressiv nichtlineare Federkennlinie erzeugt werden, wie sie erfindungsgemäß am zweiten Ende des Bewegungsbereiches der Schleifkörpers bereitgestellt werden soll.

Eine einfache und daher besonders zweckmäßige Realisierung eines erfindungsgemäßen Stromabnehmers kann darin bestehen, dass er ein erstes Drehlager mit einer ersten Achse aufweist, durch welches ein Hebel zwischen den zwei mechanischen Anschlägen drehbar mit einem an dem bewegbaren Verbraucher befestigten Träger verbunden ist, und dass er ein zweites Drehlager mit einer zweiten Achse aufweist, durch welches der Halter des Schleifkörpers mit dem Hebel verbunden ist, wobei die erste Achse und die zweite Achse parallel zueinander liegen. In diesem Fall kann die Federanordnung den Hebel mit einer Kraft in Richtung einer zunehmenden Entfernung des Halters des Schleifkörpers von dem Träger beaufschlagen, um die Anpresskraft für den Schleifkörper gegen die Stromschiene der Schleifleitung bereitzustellen.

Die Erfindung wird nachfolgend anhand von detaillierten Ausführungsbeispielen mit Bezug auf die begleitenden Zeichnungen beschrieben. Diese zeigen:
- **Fig. 1**: eine schematische dreidimensionale Schrägansicht eines erfindungsgemäßen Stromabnehmers mit einer Veranschaulichung verschiedener Abschnitte seines Bewegungsbereichs und
- **Fig. 2**: eine schematische Seitenansicht eines Teils eines erfindungsgemäßen Stromabnehmers
- Fig. 3: schematische Längsschnittansichten eines Dämpfungselements des erfindungsgemäßen Stromabnehmers in zwei verschiedenen Betriebsstellungen.

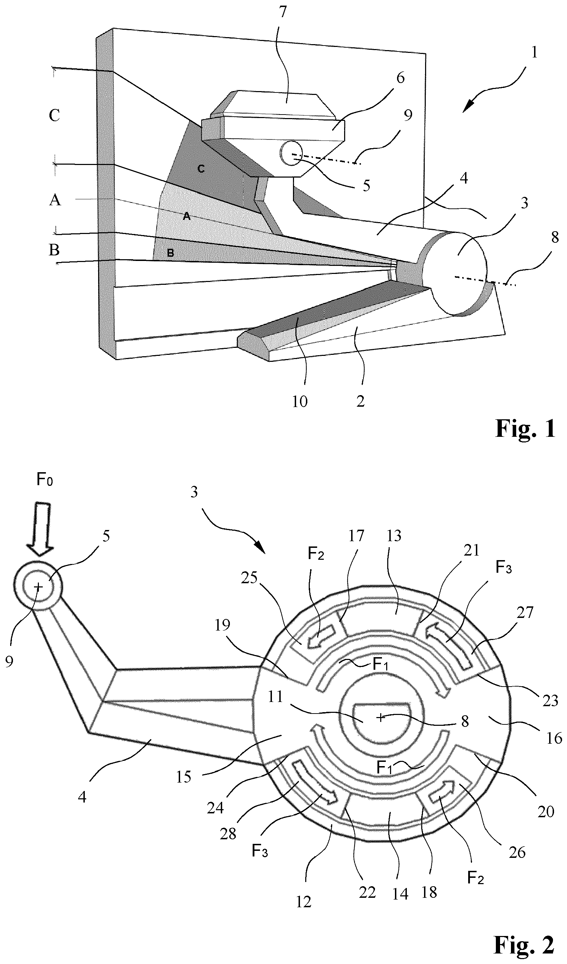

Wie Fig. 1 zeigt, sind die wesentlichen Komponenten einer möglichen Ausführungsform eines erfindungsgemäßen Stromabnehmers 1 ein Träger 2, ein erstes Drehlager 3, ein Hebel 4, ein zweites Drehlager 5 und ein Halter 6, an dem ein Schleifkörper 7 befestigt ist. Der Hebel 4 ist durch das erste Drehlager 3 drehbar an dem Träger 2 gelagert und erstreckt sich von diesem aus zu dem zweiten Drehlager 5, durch welches der Halter 6 des Schleifkörpers 7 drehbar an dem Hebel 4 gelagert ist, wobei die Drehachsen 8 und 9 der beiden Drehlager 3 bzw. 5 parallel zueinander liegen. Der Schleifkörper 7 ist elektrisch leitfähig und über eine Zuleitung mit einem elektrischen Verbraucher verbunden, der sich entlang einer vorbestimmten Bahn zwangsgeführt bewegen kann. Der Träger 2 ist an dem beweglichen Verbraucher, der in den Figuren nicht dargestellt ist, befestigt.

Durch gleichzeitige Drehungen der beiden Drehlager 3 und 5 in entgegengesetzten Richtungen kann der Halter 6 mit dem Schleifkörper 7 gegenüber dem Träger 2 angehoben oder abgesenkt werden, wobei sich die Oberseite des Schleifkörpers 7, die im Betrieb an einer Stromschiene einer in den Figuren nicht gezeigten Schleifleitung anliegt, auch neigen kann, damit bei kontinuierlichen Änderungen des Abstandes zwischen dem Träger 2 und der Schleifleitung entlang der Bewegungsbahn des Verbrauchers der flächige Kontakt zwischen der Oberseite des Schleifkörpers 7 und der Stromschiene der Schleifleitung ununterbrochen aufrechterhalten bleibt.

Der Bewegungsbereich des Hebels 4 gegenüber dem Träger 2 wird durch zwei in Fig. 1 nicht gezeigte mechanische Anschläge innerhalb des Drehlagers 3 begrenzt. Entsprechendes gilt auch für den durch das Drehlager 5 geschaffenen Bewegungsbereich des Halters 6 gegenüber dem Hebel 4, wobei der Bewegungsbereich des Halters 6 aufgrund der Länge des Hebels 4 insgesamt im wesentlichen durch den Bewegungsbereich des Hebels 4 gegenüber dem Träger 2 bestimmt wird.

Die Kraft zum Anpressen der Oberseite des Schleifkörpers 7 gegen eine Stromschiene einer Schleifleitung wird durch eine Federanordnung in dem Drehlager 3 erzeugt, welche sich dort an dem Träger 2 abstützt und eine Kraft auf den Hebel 4 ausübt, welche diesen beim Fehlen einer Gegenkraft der Stromschiene in Fig. 1 im Uhrzeigersinn gegen einen ersten der beiden mechanischen Anschläge bewegt. Durch die Gegenkraft der Stromschiene, die im Betrieb des Stromabnehmers 1 an einer Schleifleitung über die Oberseite des Schleifkörpers 7, den Halter 6 und das Drehlager 5 auf den Hebel 4 übertragen wird, wird der Hebel 4 in einem mittleren Bereich seines durch die zwei Anschläge begrenzten Bewegungsbereiches, d.h. in einem in Fig. 1 mit A gekennzeichneten mittleren Bereich seines Winkels zur Oberseite 10 des Trägers 2 gehalten.

In den in Fig. 1 mit C gekennzeichneten Bereich, in dem der Winkel zwischen dem Hebel 4 und der Oberseite 10 des Trägers 2 größer ist als in dem Bereich A, gerät der Hebel 4 bei einem Verschwinden der Gegenkraft der Stromschiene, d.h. wenn der bewegliche Verbraucher in einen Abschnitt seiner Bewegungsbahn eintritt, in dem keine Schleifleitung verlegt ist. Dieser Bereich C wird durch den ersten mechanischen Anschlag begrenzt, gegen den der Hebel 4 infolge der Kraft der Federanordnung anschlägt.

In den in Fig. 1 mit B gekennzeichneten Bereich, in dem der Winkel zwischen dem Hebel 4 und der Oberseite 10 des Trägers 2 kleiner ist als in dem Bereich A, gerät der Hebel 4 dann, wenn sich der Abstand zwischen dem beweglichen Verbraucher, an dem der Träger 2 befestigt ist, und der Schleifleitung abnormal verringert, wie es beispielsweise bei einer Kurvenfahrt des Stromabnehmers 1 der Fall sein kann. Dieser Bereich wird durch einen zweiten mechanischen Anschlag begrenzt.

Erfindungsgemäß ist eine Dämpfungseinrichtung vorgesehen welche nur in dem Bereich C wirksam ist, in dem die Gegenkraft der Stromschiene auf den Hebel 4 fehlt. Diese Dämpfungseinrichtung dämpft die Bewegung des Hebels 4 dann, wenn dieser durch ein schlagartiges Verschwinden der Gegenkraft der Stromschiene, wie es beim Ausfahren des Stromabnehmers 1 aus einem Ende einer Schleifleitung vorkommt, durch die Kraft der Federanordnung in Richtung des ersten Anschlags beschleunigt wird. Durch diese Dämpfung wird ein hartes Anschlagen des Hebels 4 an dem ersten Anschlag verhindert und die mechanische Belastung, die langfristig zu einem Verschleiß vor allem der Drehlager 3 und 5 führt, entscheidend verringert.

Um die mechanische Belastung des Stromabnehmers auch bei anderen Betriebszuständen zu verringern, sind erfindungsgemäß des weiteren unterschiedliche Steifigkeiten der Federanordnung in den Bereichen A und B vorgesehen, d.h. die Steifigkeit der Federanordnung ist im Bereich B, der an einem Ende durch den zweiten Anschlag begrenzt wird, geringer als im normalen Betriebsbereich A. Durch diese geringere Steifigkeit im Endbereich B wird bei einer abnormalen Verringerung des Abstandes zwischen dem Verbraucher und der Schleifleitung ein übermäßiger Anstieg der Anpresskraft zwischen dem Schleifkörper 7 und der Stromschiene der Schleifleitung, der auch eine entsprechende Belastung der diese Kraft übertragenden Drehlager 3 und 5 zur Folge hätte, verhindert.

Eine mögliche Realisierung der vorausgehend erläuterten Funktionen der Erfindung zeigt in schematischer Form Fig. 2. Dargestellt sind dort in einer Seitenansicht nur die Drehlager 3 und 5 sowie der Hebel 4, auf den über das Drehlager 5 die Gegenkraft F₀ der Stromschiene wirkt. Der Hebel 4 ist an einer Welle 11 des Drehlagers 3 befestigt, die an einem Lagerblock 12 des Drehlagers 3 um dessen Drehachse 8 drehbar gelagert ist. Der Lagerblock 12 hat zwei einander radialsymmetrisch gegenüberliegende axiale Vorsprünge 13 und 14, die den axialen Bereich des Drehlagers 3 überdecken, in dem der Hebel 4 angeordnet ist. Dieser hat im Bereich des Lagerblocks 12 die Form eines Kreises mit einem mittigen Ausschnitt für die Welle 11 und mit zwei einander radialsymmetrisch gegenüberliegenden Auslegern 15 und 16, wobei sich ein abgewinkelter Teil des Hebels 4 von dem ersten Ausleger 15 aus zu dem anderen Drehlager 5 hin erstreckt.

Hierdurch stehen in Umfangsrichtung des Drehlagers 3 radiale Anschlagflächen 17 und 18 an den Vorsprüngen 13 bzw. 14 des Lagerblocks 12 entsprechenden radialen Anschlagflächen 19 und 20 an den Auslegern 15 bzw. 16 des Hebels 4 gegenüber, welche zusammen einen Anschlag für eine Drehbewegung des Hebels 4 im Uhrzeigersinn, durch welche sich sein Winkel gegenüber der Oberseite 10 des Trägers 2 vergrößert, bilden. Außerdem stehen in Umfangsrichtung des Drehlagers 3 zwei radiale Anschlagflächen 21 und 22 an den Vorsprüngen 13 bzw. 14 des Lagerblocks 12 entsprechenden radialen Anschlagflächen 23 und 24 an den Auslegern 16 bzw. 15 des Hebels 4 gegenüber, welche zusammen einen Anschlag für eine Drehbewegung des Hebels 4 entgegen dem Uhrzeigersinn, durch welche sich sein Winkel gegenüber der Oberseite 10 des Trägers 2 verringert, bilden.

Zur Ausübung einer Anpresskraft des Schleifkörpers 7 gegen die Stromschiene der Schleifleitung, die sich im Gleichgewicht mit der Gegenkraft F₀ befindet, ist eine Federanordnung mit einer ersten Feder vorgesehen, welche eine auf den Hebel 4 wirkende Gesamtkraft F₁ ausübt, die ein auf den Hebel 4 wirkendes Drehmoment im Uhrzeigersinn erzeugt. Diese Feder ist in Fig. 2 selbst nicht dargestellt, sondern nur durch zwei Pfeile symbolisiert, welche die Richtung der von ihr ausgeübten Kraft F₁ angeben. Es kann sich bei ihr insbesondere um eine Torsionsfeder, oder um eine auf Zug beanspruchte Spiralfeder handeln, deren Mittelachse jeweils die Achse 8 des Drehlagers 3 ist. Federn solcher Art sind an sich bekannt und bedürfen keiner detaillierten Beschreibung.

Um zu verhindern, dass der Hebel 4 bei einem Verschwinden der Gegenkraft F₀ nach der Ausfahrt des Stromabnehmers 1 aus dem Ende einer Schleifleitung durch die Kraft F₁ beschleunigt wird und die Anschlagflächen 19 und 20 des Hebels 4 ungebremst gegen die Anschlagflächen 17 bzw. 18 des Lagerblocks 12 schlagen, ist eine Dämpfungseinrichtung vorgesehen, die aus zwei Dämpfungselementen 25 und 26 besteht, von denen das erste vor der Anschlagfläche 17 des Vorsprungs 13 und das zweite vor der Anschlagfläche 18 des Vorsprungs 14 angeordnet ist. Die Dämpfungselemente 25 und 26 erzeugen bei einem Kontakt mit den Anschlagflächen 19 bzw. 20 des Hebels 4 zusammen eine Dämpfungskraft F₂, welche der Kraft F₁ der ersten Feder entgegengerichtet ist und eine Abbremsung der Bewegung des Hebels 4 bewirkt, bevor es zu einem Kontakt der Anschlagflächen 17 und 19 bzw. 18 und 20 kommt, wodurch eine heftige impulsartige Belastung des Drehlagers 3 vermieden wird.

Bei den Dämpfungselementen 25 und 26 kann es sich im einfachsten Fall um Federelemente wie insbesondere Pufferelemente aus einem Elastomer handeln. Es könnte aber anstatt zweier Federelemente auch ein Reibungsdämpfer oder ein Strömungsdämpfer an sich bekannter Art vorgesehen sein

Wie aus Fig. 2 ersichtlich ist, besteht in der dort dargestellten Normalstellung des Hebels 4 jeweils ein Abstand zwischen den Anschlagflächen 19 und 20 des Hebels 4 und den Dämpfungselementen 25 bzw. 26, so dass letztere erst nach einer gewissen Mindestauslenkung des Hebels 4 aus seiner Normalstellung wirksam werden. Der Abstand ist so bemessen, dass die Dämpfungselemente 25 und 26 bei einer im Betrieb des Stromabnehmers 1 zu erwartenden geringfügigen Abweichung von seiner Normalstellung, die sich unter anderem im Laufe der Zeit durch eine Abnutzung des Schleifkörpers 7 ergeben kann, noch nicht in Aktion treten. In Fig. 1 ist diese Normalstellung des Hebels 4 dargestellt, in der er sich in der Mitte des dort mit A gekennzeichneten Bereiches befindet. Der Bereich, in dem die Dämpfungselemente 25 und 26 wirksam sind, ist der dort mit C gekennzeichnete Bereich.

In der entgegengesetzten Drehrichtung des Hebels 4 dämpft die erste Feder dessen Bewegung, falls es zu einer Verringerung des Abstandes zwischen dem Träger 2 und der Stromschiene der Schleifleitung kommt. Um in diesem Fall sowohl eine ausreichende Dämpfungswirkung im normalen Schwankungsbereich besagten Abstandes zu gewährleisten, als auch im Fall einer über den normalen Schwankungsbereich hinausgehenden Verringerung besagten Abstandes einen exzessiven Anstieg der Kräfte F₀ und F₁ zu vermeiden, könnte eine zweite Feder zugeschaltet werden, welche eine Kraft auf den Hebel 4 ausübt, die der Kraft F₁ der ersten Feder entgegengerichtet ist, jedoch kleiner ist als die erste Kraft F₁. Diese zweite Feder wäre also der ersten Feder mechanisch entgegengeschaltet, wenn die Auslenkung letzterer ein bestimmtes Ausmaß überschreitet, d.h. wenn sich der Hebel 4 aus dem Bereich A in den Bereich B bewegt.

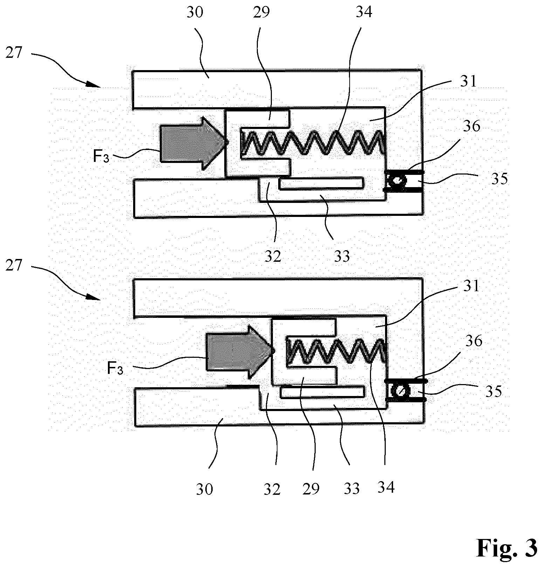

Eine Zuschaltung einer zusätzlichen Feder mit einer Kraft, deren Richtung der Kraft F₁ entgegengesetzt ist, wäre beispielsweise auf der Basis eines die Auslenkung des Hebels 4 erfassenden Winkelsensors, einer elektronischen Steuerung und eines elektromechanischen Aktors realisierbar, was jedoch mit unverhältnismäßig großem Aufwand verbunden wäre. Eine einfachere Lösung besteht darin, mindestens zwei Federn mechanisch parallel zueinander zu schalten, so dass sich ihre Kräfte addieren, und bei einer Auslenkung vorbestimmten Ausmaßes eine dieser Federn unwirksam werden zu lassen, was mit rein mechanischen Mitteln ohne Einsatz von elektronischen und elektromechanischen Komponenten möglich ist. Eine solche Lösung wird nachfolgend anhand Fig. 3 beschrieben.

Fig. 3 zeigt eine Zusatzfeder 27, die als zweifacher Bestandteil der Federanordnung des Stromabnehmers von Fig. 2 vorgesehen ist, d.h. es ist dort eine zweite identische Feder 28 vorgesehen. Beide Federn 27 und 28 stützen sich jeweils an einem axialen Vorspruch 13 bzw. 14 ab und werden bei einer Auslenkung des Hebels 4 entgegen dem Uhrzeigersinn von jeweils einer Anschlagfläche 23 bzw. 24 eines Auslegers 15 bzw. 16 des Hebels 4 mit einer Kraft beaufschlagt. Die von der Federanordnung auf den Hebel 4 ausgeübte Gesamtkraft setzt sich demnach additiv aus der Kraft F₁ einer ersten, in Fig. 2 nicht gezeigten Feder, bei der es sich beispielsweise um eine Torsionsfeder handeln kann, und der Kraft der zwei Zusatzfedern 27 und 28 zusammen, die erfindungsgemäß insbesondere in Form pneumatischer Federn ausgeführt sein können, wie nachfolgend erläutert wird.

Der Hebel 4 übt bei einer Auslenkung in Form einer Drehung entgegen dem Uhrzeigersinn in Fig. 1 und 2, d.h. bei einer Annäherung des Trägers 2 des Stromabnehmers 1 an die Stromschiene der Schleifleitung, über die Anschlagfläche 23 eine Kraft F₃ auf einen Kolben 29 aus, der in einem Zylinder 30 beweglich geführt ist. Da der Hebel 4 eine Drehbewegung und der Kolben 29 eine lineare Bewegung ausführt, ist die Anschlagfläche 23 über ein in Fig. 3 nicht gezeigtes Gelenk an sich bekannter Art verbunden, welches die Umsetzung der Drehbewegung des Hebels 4 in eine Linearbewegung des Kolbens 29 ermöglicht. Der Kolben 29 definiert zusammen mit dem Zylinder 30 eine Kammer 31, in der ein Gasvolumen eingeschlossen ist, dass bei einer Bewegung des Kolbens 29 in den Zylinder 30 hinein komprimiert wird und hierdurch eine der Kraft F₃ entgegen gerichtete Reaktionskraft erzeugt. Diese Funktionsweise einer pneumatischen Feder ist als solche bekannt. Bei dem Gas in der Kammer 31 handelt es sich vorzugsweise um Luft.

Die erfindungsgemäße Besonderheit der pneumatischen Zusatzfedern 27 bzw. 28 liegt darin, dass an der Innenseite des Zylinders 30 eine Auslassöffnung 32 vorgesehen ist, mit der ein innerer Endbereich der Kammer 31 durch einen Kanal 33 verbunden ist, und die je nach Position des Kolbens 29 entweder in die Kammer 31 zurückführt oder durch den Kolben 29 überdeckt und abgedichtet wird oder hinter dem außenseitigen Ende des Kolbens 29 in einem nach außen offenen Abschnitt der Innenseite des Zylinders 30 liegt. Diese Anordnung der Auslassöffnung 32 und des Kanals 33 bewirkt, dass die Auslassöffnung 32 bei einer Bewegung des Kolbens 29 in den Zylinder 30 hinein an einer bestimmten Position des Kolbens 30 freigegeben wird und das im Inneren der Kammer 31 befindliche Gas dann in die Umgebung entweichen kann, wodurch die pneumatische Zusatzfeder 27 bzw. 28 wirkungslos wird, d.h. der auf den Kolben 29 ausgeübten Kraft F₃ keine Reaktionskraft mehr entgegensetzt.

Die Kraft F₃ wird von dem Hebel 4 bei dessen Auslenkung ausgeübt und stellt einen Teil der von dem Hebel 4 insgesamt auf die Federanordnung des Drehlagers 3 ausgeübten Kraft dar. Durch den Wegfall des Anteils der Kraft der pneumatischen Zusatzfedern 27 und 28 bei einer bestimmten Auslenkung des Hebels 4 sinkt die Kraft der gesamten Federanordnung des Drehlagers 3 bei dieser Auslenkung schlagartig ab. Die pneumatischen Zusatzfedern 27 und 28 und die mechanische Verbindung des Hebels 4 mit diesen sind so ausgelegt, dass dieser Abfall der Federkraft beim Übergang von dem Winkelbereich A in den Winkelbereich B von Fig. 1 erfolgt. Der schlagartige Abfall der Kraft der pneumatischen Zusatzfedern 27 und 28 entspricht in seiner Wirkung der Zuschaltung einer Feder mit entgegengesetzter Kraftrichtung zu einer weiterhin unverändert wirksamen Feder bei einer bestimmten Auslenkung letzterer.

In Fig. 3 ist noch eine Rückholfeder 34 gezeigt, deren Funktion darin besteht, bei einem Wegfall der durch den Hebel 4 auf den Kolben 29 ausgeübten Kraft F₃ den Kolben 29 zum äußeren Ende des Zylinders 30 zurückzubewegen, insbesondere in eine Position, in der die Auslassöffnung wieder innerhalb der Kammer 31 liegt oder zumindest durch den Kolben 29 verschlossen ist, so dass die pneumatische Feder 27 bzw. 28 ihre Wirksamkeit zurückerlangt. Die Rückholfeder 34 erzeugt zwar auch eine zusätzliche Gegenkraft gegen die von dem Hebel 4 herrührende Kraft F₃, die auch nach einer Freigabe der Auslassöffnung 32 erhalten bleibt und mit weiterer Auslenkung noch zunimmt, doch hat die Rückholfeder 34 nur eine vergleichsweise geringe Steifigkeit, die nur dazu auszureichen braucht, den Kolben 29 nach einem Wegfall der Kraft F₃ in eine Ruhestellung zurückzubewegen. Die kraft der Rückholfeder 34 trägt daher im Vergleich zu der von der Kompression des Gases in der Kammer 31 herrührenden Kraft nur sehr wenig zur Gesamtcharakteristik der Federanordnung des Drehlagers 3 bei.

In der Wand des Zylinders 30 ist in einem Bereich, der in keiner Position des Kolbens 29 von diesem abgedeckt wird, beispielsweise wie in Fig. 3 gezeigt in der Stirnwand, eine Öffnung 35 vorgesehen, in der ein Ventil 36 angeordnet ist. Dieses Ventil 36 ist bei einem Überdruck in der Kammer 31 geschlossen und bei einem Unterdruck in der Kammer 31 geöffnet. Seine Funktion besteht darin, einen Zustrom von Gas, vorzugsweise Luft aus der Umgebung, in die Kammer 31 zu ermöglichen, wenn sich das Volumen der Kammer 31 nach einem Wegfall der Kraft F₃ des Hebels 4 durch eine Bewegung des Kolbens 29 infolge der Kraft der Rückstellfeder 34 vergrößert. Ohne das Ventil 36 würde nämlich ein Unterdruck in der Kammer 31 entstehen, wenn der Kolben 29 beim Zurückfahren in Richtung seiner Ruheposition die Auslassöffnung 32 wieder verschließt, wodurch die Bewegung in die Ruhestellung behindert würde oder eine unerwünscht hohe Steifigkeit der Rückstellfeder erfordern würde.

Erfindungsgemäß können die pneumatischen Zusatzfedern 27 und 28 so ausgelegt sein, dass die Federkennlinie der gesamten Federanordnung in den Abschnitten A und B des Bewegungsbereichs des Hebels 4 nichtlinear in Form einer abschnittsweise verschiedenen Federsteifigkeit ist, wobei die resultierende Federsteifigkeit im Abschnitt B geringer ist als im Abschnitt A Hierbei nimmt Federsteifigkeit beim Übergang vom Bereich A in den Bereich B schlagartig ab. Insgesamt ergibt sich somit eine degressive Federkennlinie.

Das vorausgehend beschriebene Ausführungsbeispiel stellt eine zweckmäßige Realisierung einer solchen degressiven Federkennlinie dar, ist jedoch nicht die einzige Möglichkeit hierzu. Eine andere Möglichkeit besteht beispielsweise in der Verwendung einer Tellerfedernsäule als Federelement, da eine Tellerfedernsäule eine degressive Federkennlinie besitzt. Letztere verläuft jedoch eher glatt, d.h. ohne sprunghafte Änderung der Steifigkeit bei einer einzigen vorbestimmten Auslenkung.

Die Erfindung beschränkt sich nicht auf die vorausgehend beschriebene Ausführungsform mit einem Hebel 4, der an einem Ende über ein Drehlager 3 mit einem Träger 2 und am anderen Ende über ein weiteres Drehlager 5 mit einem Halter 6 eines Schleifkörpers 7 verbunden ist. So könnte die Variabilität des Abstandes zwischen der Stromschiene und dem beweglichen Verbraucher entlang dessen Bewegungsbahn beispielsweise auch durch eine Anordnung gefederter Teleskoprohre zur Verbindung zwischen dem Träger 2 und dem Halter 6 des Schleifkörpers 7 realisiert werden. Auch bei einer solchen Struktur mit linearer anstatt rotatorischer Bewegung des Verbindungsgliedes zwischen dem Träger 2 und dem Halter 6 könnte die Erfindung eingesetzt werden, wobei in diesem Fall beispielsweise Schraubenfedern oder Evolutfedern anstelle einer Torsionsfeder als Federelemente zur Erzeugung der Anpresskraft des Schleifkörpers verwendet werden könnten und sich bei den beschriebenen pneumatischen Zusatzfedern 27 und 28 die Umsetzung der rotatorischen Auslenkung des Hebels 4 in eine lineare Auslenkung des Kolbens 29 durch ein Gelenk erübrigen würde.

### Bezugszeichenliste

- 1: Stromabnehmer
- 2: Träger
- 3: Erstes Drehlager
- 4: Hebel
- 5: Zweites Drehlager
- 6: Halter
- 7: Schleifkörper
- 8: Erste Drehachse
- 9: Zweite Drehachse
- 10: Oberseite
- 11: Welle
- 12: Lagerblock
- 13, 14: Vorsprünge
- 15, 16: Ausleger
- 17-24: Anschlagfläche
- 25, 26: Dämpfungselement
- 27, 28: Zusatzfeder
- 29: Kolben
- 30: Zylinder
- 31: Kammer
- 32: Auslassöffnung
- 33: Kanal
- 34: Rückstellfeder
- 35: Öffnung
- 36: Ventil
- F₀, F3: Gegenkraft
- F1,F2: Federkraft
- A, B, C: Abschnitt des Bewegungsbereichs

## Patentansprüche

1. Stromabnehmer (1) zur elektrischen Versorgung eines längs einer Schleifleitung bewegbaren elektrischen Verbrauchers, mit einem beweglich gelagerten Halter (6) für einen Schleifkörper (7), dessen Bewegungsbereich durch zwei mechanische Anschläge (17, 18; 21, 22) begrenzt wird, und der zum Anpressen des Schleifkörpers (7) gegen eine Stromschiene der Schleifleitung durch eine Federanordnung mit einer Kraft in Richtung eines ersten Endes seines Bewegungsbereiches beaufschlagt wird, **dadurch gekennzeichnet, dass** der Bewegungsbereich des Halters (6) drei Abschnitte (A, B, C) umfasst, wobei ein vorbestimmter erster Abschnitt (C) auf einer Seite durch das erste Ende des Bewegungsbereiches begrenzt wird und nicht den gesamten Bewegungsbereich umfasst, sich an den vorbestimmten ersten Abschnitt (C) ein zweiter Abschnitt (A) und an diesen ein dritter Abschnitt (B) anschließt, welcher sich bis zu einem zweiten, dem ersten entgegengesetzten Ende des Bewegungsbereiches erstreckt, und dass die Steifigkeit der Federanordnung im dritten Abschnitt (B) geringer ist als im zweiten Abschnitt (A).

2. Stromabnehmer (1) nach Anspruch 1, **dadurch gekennzeichnet, dass** die Federanordnung mindestens zwei mechanisch parallel zueinander geschaltete Federn aufweist, von denen mindestens eine im gesamten Bewegungsbereich des Halters (6) wirksam ist und mindestens eine im zweiten Abschnitt (A) des Bewegungsbereiches des Halters (6) wirksam ist und im dritten Abschnitt (B) unwirksam ist.

3. Stromabnehmer (1) nach Anspruch 2, **dadurch gekennzeichnet, dass** die im zweiten Abschnitt (A) wirksame und im dritten Abschnitt (B) unwirksame Feder (27, 28) und die im gesamten Bewegungsbereich des Halters (6) wirksame Feder unterschiedliche Steifigkeiten aufweisen.

4. Stromabnehmer (1) nach Anspruch 2 oder 3, **dadurch gekennzeichnet, dass** die im zweiten Abschnitt (A) wirksame und im dritten Abschnitt (B) unwirksame Feder (27, 28) eine pneumatische Feder ist.

5. Stromabnehmer (1) nach Anspruch 4, **dadurch gekennzeichnet, dass** die pneumatische Feder (27, 28) eine Kammer (31) mit variablem, von der Auslenkung der Feder (27, 28) abhängigem Volumen aufweist, in der bei einer Auslenkung, durch welche sich die Federkraft erhöht, ein Gas komprimiert wird, und dass die Kammer (31) eine Auslassöffnung (32) aufweist, die bei einem vorbestimmten Ausmaß der Auslenkung geöffnet wird, wodurch die pneumatische Feder (27, 28) bei Überschreitung dieses Ausmaßes der Auslenkung unwirksam wird.

6. Stromabnehmer (1) nach Anspruch 5, **dadurch gekennzeichnet, dass** die pneumatische Feder (27, 28) eine Rückstellfeder (34) aufweist, welche die pneumatische Feder (27, 28) bei einem Wegfall der sie beaufschlagenden äußeren Kraft nach der Freigabe der Auslassöffnung (32) in eine Stellung zurückbewegt, in der sie wirksam ist.

7. Stromabnehmer (1) nach Anspruch 5 oder 6, **dadurch gekennzeichnet, dass** die pneumatische Feder (27, 28) ein Ventil (36) in einer die Kammer (31) umgebenden Wandung aufweist, welches bei einem Überdruck in der Kammer (31) gegenüber der Umgebung geschlossen ist und bei einem Unterdruck in der Kammer (31) gegenüber der Umgebung geöffnet ist.

8. Stromabnehmer (1) nach Anspruch 1, **dadurch gekennzeichnet, dass** die Federanordnung mindestens eine Säule aus Tellerfedern aufweist.

9. Stromabnehmer (1) nach einem der Ansprüche 1 bis 8, **dadurch gekennzeichnet, dass** er ein erstes Drehlager (3) mit einer ersten Achse (8) aufweist, durch welches ein Hebel (4) zwischen den zwei mechanischen Anschlägen (17, 18; 21, 22) drehbar mit einem an dem bewegbaren Verbraucher befestigten Träger (2) verbunden ist, und dass er ein zweites Drehlager (5) mit einer zweiten Achse (9) aufweist, durch welches der Halter (6) des Schleifkörpers (7) mit dem Hebel (4) verbunden ist, wobei die erste Achse (8) und die zweite Achse (9) parallel zueinander liegen.

10. Stromabnehmer (1) nach Anspruch 9, **dadurch gekennzeichnet, dass** die Federanordnung den Hebel (4) mit einer Kraft in Richtung einer zunehmenden Entfernung des Halters (6) des Schleifkörpers (7) von dem Träger (2) beaufschlagt.

11. Stromabnehmer (1) nach einem der Ansprüche 1 bis 10 oder dem Oberbegriff des Anspruchs 1, **dadurch gekennzeichnet, dass** eine Dämpfungseinrichtung (25, 26) vorgesehen ist, welche eine durch die Federanordnung bewirkte Bewegung des Halters (6) in Richtung des ersten Endes seines Bewegungsbereiches dämpft, wenn sich der Halter (6) innerhalb eines vorbestimmten ersten Abschnitts (C) seines Bewegungsbereiches, der auf einer Seite durch das erste Ende begrenzt wird und nicht den gesamten Bewegungsbereich umfasst, befindet.

12. Stromabnehmer (1) nach Anspruch 11, **dadurch gekennzeichnet, dass** die Dämpfungseinrichtung (25, 26) in Form eines Strömungsdämpfers oder eines Reibungsdämpfers oder mindestens eines Federelements realisiert ist.
